Europäisches Patentamt

European Patent Office

Office européen des brevets

(19)

(11) **EP 1 698 894 A2**

(12) **EUROPEAN PATENT APPLICATION**

(43) Date of publication:
06.09.2006 Bulletin 2006/36

(51) Int Cl.:
*G01N 29/44* (2006.01)   *G01N 29/34* (2006.01)
*G01N 29/04* (2006.01)   *G01N 29/11* (2006.01)
*G01N 29/42* (2006.01)

(21) Application number: 06110527.6

(22) Date of filing: 28.02.2006

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: 04.03.2005 GB 0504500

(71) Applicant: **Guided Ultrasonics Limited
Nottingham
Nottinghamshire  NG15 9ER (GB)**

(72) Inventor: **Pavlakovic, Brian,
c/o Guided Ultrasonics Limited
Nottingham, Nottinghamshire NG15 9ER (GB)**

(74) Representative: **Piotrowicz, Pawel Jan Andrzej et
al
Venner Shipley LLP
20 Little Britain
London EC1A 7DH (GB)**

(54)    **Ultrasonic pipe inspection with a signal processing arrangement**

(57)    Apparatus for inspecting a pipe using guided ultrasonic waves includes a signal processing arrangement. The signal processing arrangement is configured to produce a response as if the pipe had been excited by a single wideband excitation wave, but which in fact had been excited by two overlapping narrowband excitation waves.

Fig. 8

EP 1 698 894 A2

## Description

The present invention relates to a signal processing arrangement and to apparatus for inspecting a pipe using guided ultrasonic waves including a signal processing arrangement.

Pipes and pipelines can be used to carry different types of gas, liquid and liquid/solid mixtures such as water, natural gas, oil, petrochemicals, agro products and waste. For example, they can be used in industry to transmit a product in or between production plants and refineries and by utility companies to distribute water and gas and to recover waste from customers.

Pipes and pipelines are susceptible to degradation and mechanical failure. For example, they may corrode, erode, wear, rupture, crack or break. Any such deterioration may result in significant loss of fluid from the pipe which in turn may cause damage to the surroundings. Therefore, it is desirable to inspect pipes, particularly to detect early signs of deterioration, so that preventative or remedial measures, such as repair or replacement of pipes, can be taken.

However, access to a pipe may be restricted and thus impede inspection. For example, the pipe may be encased in a protective cover, buried underground, embedded in a wall or suspended above ground. Thus, gaining access to the pipe may require stripping the protective cover, excavating the pipe or assembling a platform.

Furthermore, if the pipe is in use, then it may not be possible to inspect the interior of the pipe.

A number of techniques may be used to inspect pipes and pipelines even when access is restricted and the pipe is in use. One technique uses ultrasonic waves having a frequency of the order of 1 kHz to 100 kHz.

A transducer is used to excite ultrasonic waves in the pipe. The waves are reflected at interfaces between regions having different acoustic impedances, for example between steel and rust.

The location of an interface may be found by using the speed of propagation of an ultrasonic wave in a medium and by measuring a time interval between transmitting the wave and receiving its reflection. Thus, information about the structure of an object or an image of the object may be obtained by measuring multiple reflections, transmitting and/or receiving multiple waves from or at different locations and/or by using a phased array of transducers.

Ultrasonic waves can propagate in a bulk material or a bounded medium, such as a pipe.

Ultrasonic guided waves are usually highly dispersive, in other words their velocities are highly frequency-dependent. Examples of guided waves include Rayleigh waves, which propagate at a surface, and Lamb waves, which propagate in plates and other shaped structures.

Ultrasonic guided waves can be divided into three regimes according to their range of propagation: short range (over distances much less than one metre), medium range (up to about five metres) and long range (up to about a hundred metres). Long-range ultrasonic guided waves usually have frequencies between 15-70 kHz.

Long-range ultrasonic guided waves can be excited at one point of a pipe, propagate over several tens of metres, reflect from interfaces caused by pipe deterioration and other structures, such as welds, and measured back at the point of origin. Thus, direct access to the entire pipe is unnecessary. Furthermore, the pipe can be quickly screened.

WO-A-9612951 and US-A-20040255678 describe systems for inspecting pipes using ultrasonic guided waves.

Notwithstanding the benefits of using ultrasonic guided waves, skilled measurement and careful analysis may be required to identify some forms of pipe deterioration, particularly corrosion due to water accumulation.

Water often builds up on the exterior of a pipe in regions near to where the pipe is supported. In these regions, the pipe is prone to corrosion, in particular rust. Therefore, it is desirable to detect and identify corrosion in these regions. However, even when there is no corrosion, waves are usually reflected from an interface between the pipe and a support. Therefore, it is also desirable to differentiate between a support and corrosion in the region near the support.

One solution is to inspect this region using ultrasonic waves at different frequencies. For example, at relatively high frequencies, the amplitude of the reflected wave is dominated by changes in geometry of structures within the pipe, such as corrosion, whereas at relatively low frequencies, the amplitude of the reflected wave is dominated by the boundary conditions of the pipe, such as at an interface with the support. Thus, by comparing responses at different frequencies, it may be possible to distinguish between the support and corrosion.

However, this approach usually requires frequencies to be carefully chosen by an operator and may even require responses to be analysed on-site to ensure that appropriate frequencies have been chosen. Alternatively, a large set of measurements, at closely-spaced frequency intervals, may be taken such that there is a high probability that an appropriate frequency has been used.

Another solution is to inspect the region using a single, wider bandwidth wave. However, wide bandwidth waves generally have a lower signal to coherent noise ratio, and hence poorer sensitivity, than narrow bandwidth waves. This is because a wide bandwidth wave usually excites unwanted wave modes. Moreover, a single, wider bandwidth wave generally increases incoherent noise.

Furthermore, a wide bandwidth measurement may be taken by performing a continuous sweep across a wide frequency range. This requires separate wave transmitters and receivers. This introduces problems of cross correlation, interference and overlap between excitation and reponse signals and requires additional post-processing of the reponse signals to extract desired wave modes.

The present invention seeks to ameliorate at least some of these problems.

According to a first aspect of the invention there is provided a signal processing arrangement comprising means for providing first and second signals, wherein the first signal includes a first frequency range, the second signal includes a second, different frequency range and the first and second frequency ranges overlap in an overlapping frequency range, and means for combining the first and second signals, the means being configured to produce a combined signal having a third frequency range, the third frequency range including at least the overlapping frequency range.

The signal processing arrangement may comprise means for providing first and second signals in the frequency domain. The signal processing arrangement may comprise means for receiving the first and second signals in the time domain and means for converting said first and second signals into the frequency domain. The signal processing arrangement may comprise means for removing first and second excitation signals from the first and second signals respectively. The signal processing arrangement may comprise means for normalising the first and second signals with respect to respective reference signals.

The signal processing arrangement may comprise means for determining the overlapping frequency range and means for modifying the first and second signals in the overlapping frequency range. The means for modifying the first and second signals in the overlapping frequency range may comprise means for applying a first transition function to the first signal and means for applying a second transition function to the second signal.

The means for applying a first transition function to the first signal and a second transition function to the second signal may comprises means for multiplying the first signal by said first transition function in said overlapping frequency range and multiplying the second signal by said second transition function in said overlapping frequency range. The first transition function may have a value of 0 at a first end of said overlapping frequency range and a value of 1 at a second end of said overlapping frequency range, and said second transition function may have a value of 1 at the first end of said overlapping frequency range and a value of 0 at a second end of said overlapping frequency range. A sum of the first and second transition functions at a given frequency in the overlapping frequency range may equal 1. The first and second transition functions may be trigonometric. The first and second transition functions may be defined as in equations 5 and 7 below.

The means for combining the first and second signals may comprise means for adding together said first and second signals in the frequency domain. The signal processing arrangement may comprise means for converting the combined signal into the time domain. The signal processing arrangement may comprise means for outputting the combined signal.

The signal processing arrangement may comprise means for providing first, second and third signals in the frequency domain, wherein the first signal includes a first frequency range, the second signal includes a second, different frequency range, the third signal includes a third, different frequency range and the first and second frequency ranges overlap in a first overlapping frequency range and the second and third frequency ranges overlap in a second overlapping frequency range and means for combining the first, second and third signals, the means being configured to produce a combined signal having a fourth frequency range, the fourth frequency range including at least the first overlapping frequency range, the second frequency range and the second overlapping frequency range.

The first and second signals may each originate from at least one transducer.

According to a second aspect of the present invention there is provided a signal processing arrangement configured to provide first and second signals, wherein the first signal includes a first frequency range, the second signal includes a second, different frequency range and the first and second frequency ranges overlap in an overlapping frequency range, and to combine the first and second signals to produce a combined signal having a third frequency range, the third frequency range including at least the overlapping frequency range.

According to a third aspect of the present invention there is provided apparatus for testing, analysing or inspecting a subject using waves comprising the signal processing arrangement.

According to a fourth aspect of the present invention there is provided apparatus for inspecting an elongate member using ultrasonic waves comprising the signal processing arrangement.

The apparatus may comprise means for generating first and second excitation signals and means for receiving the first and second signals corresponding to the first and second excitation signals respectively. The signal generating means may be configured to generate said signals successively. The apparatus may comprise means for generating waves for inspecting the subject. The wave generating means may be configured to excite waves in the subject. The wave generating means may comprise at least one transducer.

The apparatus may comprise means for generating the first and second signals. The signal generating means may be configured to detect waves in the subject. The signal generating means may comprise at least one transducer.

The wave generating means and the signal generating means may be the same.

According to a fifth aspect of the present invention there is provided a method of signal processing, the method comprising providing first and second signals, wherein the first signal includes a first frequency range, the second signal includes a second, different frequency range and the first and second frequency ranges overlap in an overlapping frequency range and combining the first and second signals, the means being configured to produce a combined signal having a third frequency range, the third frequency range including at least the overlapping frequency range.

The providing the first and second signals may comprise providing the first and second signals in the frequency domain.

According to a sixth aspect of the present invention there is provided a method of testing, analysing or inspecting a subject using waves including a method of signal processing. The waves may be ultrasonic waves. The subject may be an elongate member, such as a pipe.

According to a seventh aspect of the present invention there is provided a method of inspecting an elongate member using guided ultrasonic waves including a method of signal processing. The elongate may be a pipe.

According to an eighth aspect of the present invention there is provided a computer program comprising instructions which, when executed by a data processing arrangement, causes said data processing arrangement to perform the method.

According to a ninth aspect of the present invention there is provided a computer-readable medium storing the computer program.

According to a tenth aspect of the present invention there is provided a signal carrying the computer program.

An embodiment of the present invention will now be described by way of example, with reference to the accompanying drawings, in which:

Figure 1 is a schematic diagram of apparatus for inspecting a pipe using guided ultrasonic waves in accordance with the present invention;

Figure 2 is a schematic diagram of functions performed by a processor shown in Figure 1;

Figure 3 is a process flow diagram of a method of ultrasonic inspection in accordance with the present invention;

Figures 4a and 4b illustrate four excitation signals in the time and frequency domains;

Figure 5 shows four response signals in the time domain;

Figure 6 shows frequency responses of the four response signals shown in Figure 5;

Figure 7 shows frequency responses of the signals shown in Figure 6 after respective excitation signals have been removed;

Figure 8 shows frequency responses of the signals shown in Figure 7 after a transition function has been applied;

Figure 9 shows a single, merged signal;

Figure 10 shows the merged frequency response shown in Figure 9 after various wave exciter combinations have been used to separate out a signal representing a single mode and direction;

Figure 11 shows a first windowed signal after a first window has been applied to the merged signal shown in Figure 10;

Figure 12 shows the first windowed signal shown in Figure 11 in the time domain;

Figure 13 shows a second windowed signal after a second window has been applied to the merged signal shown in Figure 10; and

Figure 14 shows the second windowed signal shown in Figure 13 in the time domain.

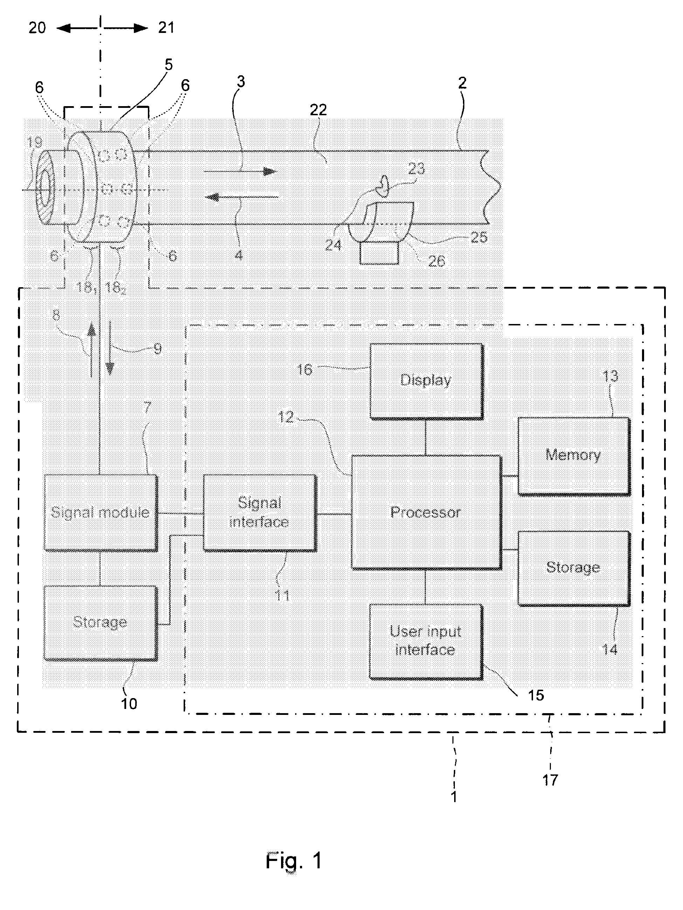

Referring to Figure 1, apparatus 1 for inspecting a pipe 2 using guided ultrasonic waves 3, 4 in accordance with the present invention is shown.

The apparatus 1 includes an excitation assembly 5 for the pipe 2 comprising a plurality of transducers 6 for generating an ultrasonic excitation wave 3 in the pipe 2 and for measuring an ultrasonic reflected wave 4 in the pipe 2, a module 7 for supplying an electrical excitation signal 8 to the excitation assembly 5 and for receiving an electrical response signal 9 from the excitation assembly 5 (hereinafter referred to as the signal module 7). The signal module 7 includes circuits (not shown) for, among other things, amplifying and multiplexing signals.

The apparatus 1 may include storage 10 for the excitation and response signals 8, 9. Storage 10 permits data to be logged remotely and processed later.

The apparatus 1 also includes a signal interface 11, a processor 12, memory 13, storage 14, an interface 15 for user input and a display 16.

The processor 12 is in the form of a microprocessor. However, more than one microprocessor may be used. Additionally or alternatively, a digital signal processor may be used. Memory 13 comprises random-access memory (not shown) and read only memory (not shown). Storage 14 is in the form of a hard disk. The user input interface 15 may comprise a keyboard (not shown) and/or a pointing device (not shown) such as mouse, pointing stick, roller ball, touch pad or touch screen.

In this example, the signal interface 11, processor 12, memory 13, storage 14, user input interface 15 and display 16 are provided by a personal computer 17. The personal computer 17 may be in the form of portable computer. A computer program (not shown) for execution by the processor 12 is stored in storage 14.

Typically, the pipe 2 is inspected with ultrasonic waves having a frequency of the order of 1 to 100 kHz.

The transducers 6 are in the form of piezoelectric transducers which are well known *per se.* However, other forms of transducers, such as electromagnetic acoustic transducers, may be used.

The transducers 6 are configured to operate in pulse-echo mode. In other words, not only do they receive the excitation signal 8 and convert the excitation signal 8 into the ultrasonic excitation wave 3, but also they receive the ultrasonic reflected wave 4 and convert the reflected wave 4 into the electrical response signal 9. However, the transducers 6 may be configured to operate in other modes. For example, some transducers 6 may be configured to operate exclusively as wave exciters and other transducers 6 may be configured to operate exclusively as wave receivers.

In this example, the transducers 6 are arranged into two rings $18_1$, $18_2$ separated along a longitudinal axis 19 of the pipe 2. Preferably, the rings $18_1$, $18_2$ are separated by a distance $\lambda/4$, where $\lambda$ is the wavelength of the ultrasonic excitation signal 8. For example, for a 50 kHz wave and a steel pipe, $\lambda$ is 64 mm for a fundamental torsional wave mode, T(0,1), and $\lambda$ is 108 mm for a first excited longitudinal wave mode, L(0, 2). Nevertheless, the rings $18_1$, $18_2$ may be separated by distances other than $\lambda/4$.

The two-ring arrangement helps to suppress propagation of excitation waves 3 along the pipe 2 on a first side 20 of the excitation assembly 5 (which may be referred to as the reverse propagation direction). However, the transducers 6 may be arranged into three or more rings (not shown) to provide further control.

For instance, a three-ring arrangement can be used to suppress unwanted wave modes and to select a single wave mode for propagation along the pipe 2 on a second side 21 of the excitation assembly 5 (which may be referred to as the forward propagation direction).

Notwithstanding the advantages of using a plural-ring arrangement, the transducers 6 may be arranged into only one ring (not shown). A one-ring arrangement (or a plural-ring arrangement in which only one ring is driven), results in several modes propagating along the pipe 2 on either side 20, 21 of the excitation assembly 5.

The number of transducers in each ring $18_1$, $18_2$ is chosen depending upon the diameter of the pipe 2. For example, to generate a 50 kHz wave, sixteen transducers 6 may be used to inspect a 3-inch (7.62 cm) diameter pipe and thirty-two transducers 6 may be used to inspect a 6-inch (15.64 cm) diameter pipe.

In this example, each transducer 6 in each ring $18_1$, $18_2$ is equally spaced from adjacent transducers 6 in the same ring. This configuration permits generation of axi-symmetric waves. However, the transducers 6 need not be equally spaced.

To generate an axi-symmetric wave, the signal module 7 is configured to supply the excitation signal 8 to each transducer 6 in a ring $18_1$, $18_1$ in phase. However, the signal module 7 may be configured to apply the excitation signal 8 to each transducer 6 according to a pre-defined phase relationship or to apply different excitation signals to each respective transducer 6.

The processor 12 is configured to supply the excitation signal 8 in the form of a toneburst signal (not shown). The toneburst signal (not shown) comprises a signal (not shown) at a given frequency, herein referred to as the "centre frequency", modulated by an envelope function (not shown). In this example, a Hanning envelope is used, although other forms of envelope may be used, such as a Gaussian or Hamming envelopes. The envelope limits the number of cycles of the signal. In this example, the excitation signal 8 has between eight and ten cycles in the window.

The processor 12 is configured to transmit the excitation signal 8 in digital form to the signal interface 11. The signal interface 11 includes digital-to-analogue and analogue-to-digital converters (not shown) and is configured to convert the excitation signal 8 from digital into analogue form and pass it to the signal module 7.

The signal module 7 may include a processor and digital-to-analogue and analogue-to digital converters (not shown). Thus, instead of supplying the excitation signal 8 to the signal module 7, the processor 12 may send an instruction (not shown) to the signal module 7 including information about the excitation signal 8 to be generated. The signal module 7 may also be provided with a user interface (not shown) for allowing a user to enter an instruction (not shown) to generate the excitation signal 8.

The signal module 7 is configured to amplify and selectively supply the excitation signal 8 to the transducers 6. The excitation signal 8 may be supplied to given ones of the transducers 6 and/or to given rings $18_1$, $18_2$ of transducers 6 and may include a phase delay. This permits selection of given wave modes, in given directions of propagation, for example as described in WO-A-9612951.

The transducers 6 generate an ultrasonic excitation wave 3 which propagates along the pipe 2.

In this example, the pipe 2 is generally formed of steel 22 and includes a region of corrosion 23. A portion of the excitation wave 3 is reflected from an interface 24 between steel 22 and corrosion 23 and forms part of the reflected wave 4.

The pipe 2 is carried by a support 25. A further portion of the excitation wave 3 is reflected from an interface 26 between the pipe 2 and the support 25.

The pipe 2 may comprise regions of different material and include other structures, such as welds (not shown) and other supports, which may reflect the excitation wave 3 so as to contribute to the reflected wave 4. However, for the sake of clarity, these are not shown or described.

The reflected wave 4 propagates along the pipe 2 and reaches the excitation assembly 5. Each transducer 6 converts a localised portion of the reflected wave 4 into an electrical signal and outputs a signal. In this example, the transducers 6 are arranged such that their signals are summed, thereby generating the response signal 9. However, signals may be processed separately. For example, signals from transducers 6 in opposing quadrants may be summed or subtracted to detect symmetric or anti-symmetric waves.

The signal module 7 is configured to receive the response signal 9, amplify it and transmit the signal 9 in analogue form to the signal interface 11. The signal interface 11 is arranged to convert the response signal 9 from analogue to digital form and to transmit the response signal 9 to the processor 12. The signal module 7 may selectively sample given ones of the transducers 6 and/or to given rings of transducers 6.

The processor 12 provides a signal processing arrangement which produces a response as if the pipe 2 had been excited by a single wideband excitation wave, but which in fact had been excited by two or more overlapping narrowband excitation waves.

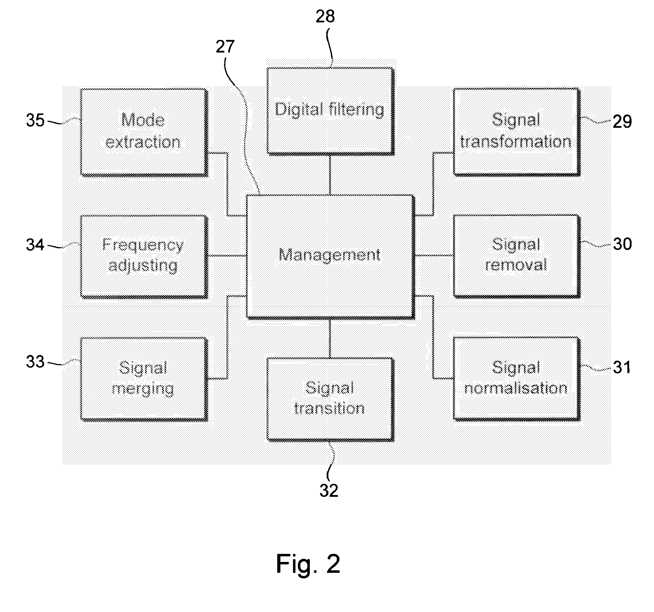

Referring to Figure 2, a schematic block diagram of processes performed by the processor 12 is shown.

A management process 27 controls processes including digital filtering 28, signal transformation 29, signal removal 30, signal normalisation 31, signal transition 32, signal merging 33, frequency adjusting 34 and mode extraction 35.

The digital filtering process 28 filters an applied signal s(t) to produce a filtered signal s'(t). For example, filtering may comprise filtering the applied signal through a high-pass filter, a low-pass filter and/or applying one or more bandpass filters.

The signal transformation process 29 converts a time-dependent signal f(t) into a frequency-dependent signal F(w) or a frequency-dependent signal G(w) into a time-dependent signal g(t). Preferably, conversion from the time domain to the frequency domain comprises a Fourier Transform and conversion from the frequency domain into the time domain comprises an Inverse Fourier Transform. Preferably, f(t) = s'(t).

The signal removal process 30 removes the effect of an input signal A(w) from an output signal B(w) to produce a new signal B'(w). The signal removal process 30 comprises dividing the output signal B(w) by the input signal A(w) in the frequency domain, i.e.:

$$B'(\omega) = \frac{B(\omega)}{A(\omega)} \qquad (Eq.\ 1)$$

Preferably, B(w) = F(w).

The signal removal process 30 may also normalise the new signal B'(w). This may comprise dividing the new signal B'(w) by a normalisation value M based on the frequency spectrum of the input signal A(w) to produce a normalised signal B''(w). The normalisation value M may be determined by:

$$M = \int\limits_{all\,\omega} |A(\omega)|\, d\omega \qquad (Eq.\ 2)$$

Alternative ways of determining the normalisation value may be used.

Thus, the normalised signal B''(w) is determined using:

$$B''(\omega) = \frac{B'(\omega)}{M} \qquad (Eq.\ 3)$$

Different input signals $A_1(\omega)$, $A_2(\omega)$,..., $A_n(\omega)$ centred at different frequencies have different normalisation values $M_1$, $M_2$, ..., $M_n$. If an input signal, such as $A_1(\omega)$, is used repeatedly to generate a plurality of output signals, $B_{1,1}(\omega)$, $B_{1,2}(\omega)$,..., $B_{1,m}(\omega)$, then a single normalisation value $M_1$ may be used to normalise new signals $B'_{1,1}(\omega)$, $B'_{1,2}(\omega)$,..., $B'_{1,m}(\omega)$ to produce $B''_{1,1}(\omega)$, $B''_{1,2}(\omega)$,..., $B''_{1,m}(\omega)$ respectively.

The signal normalisation process 31 receives a signal C(w) and produces a normalised signal $C(\omega)$. The signal normalisation process 31 may comprise the process described earlier, namely dividing a signal C(w) by a normalisation value M. In other words, C(w) = B'(w).

The signal transition process 32 is used to smooth respective portions of a lower frequency signal $S_L(\omega)$ and

a higher frequency signal $S_H(\omega)$ in a region where the two signals overlap. The overlapping region is referred to as the transition region and extends from a lower frequency limit $\omega_A$ to an upper frequency limit $\omega_B$.

In this example, the transition region is determined based on centre frequencies $\omega_L$, $\omega_H$ of excitation signals $R_L(\omega)$, $R_H(\omega)$ used to generate the higher- and lower-frequency signals $S_L(\omega)$, $S_H(\omega)$. The values of the centre frequencies $\omega_L$, $\omega_H$ are chosen such that frequencies $\omega'_L$, $\omega'_H$ at which the amplitudes of the signals $R_L(\omega)$, $R_H(\omega)$ fall by — 3 dB from peak amplitude (usually called the — 3 dB point) substantially or approximately coincide, i.e. $\omega'_L = \omega'_H$ or $\omega'_L \approx \omega'_H$. Once the centre frequencies $\omega_L$, $\omega_H$ have been chosen, the lower and upper frequency limits $\omega_A$, $\omega_B$ are determined to be the frequencies $\omega''_L$, $\omega''_H$ at which the amplitudes of signals $R_L(\omega)$, $R_H(\omega)$ fall by - 6 dB from peak amplitude. Thus, $\omega_L < \omega_A < \min\{\omega'_L, \omega'_H\} \le \max\{(\omega'_L, \omega'_H)\} < \omega_B < \omega_H$.

Choosing a transition region in this way is a compromise between signal-to-noise and the separation, and thus the number, of excitation signals, needed to cover a given range. Nevertheless, smaller or larger ranges may be used. However, a smaller range is usually less efficient since more measurements are needed to cover the given range, whereas a larger range usually introduces more incoherent noise when the signals are combined. The lower and upper frequency limits $\omega_A$, $\omega_B$ may be calculated in other ways.

Once a transition region has been determined the signals $S_L(\omega)$, $S_H(\omega)$ are smoothed ready for them to be added. This is to compensate for inherent differences between signals $S_L(\omega)$, $S_H(\omega)$ arising from, for example, different levels of incoherent noise or changes in behaviour of the transducers 6 and/or signal module 7. If no allowance is made and the signals $S_L(\omega)$, $S_H(\omega)$ are simply added, then additional noise and artefacts may be introduced into a combined signal after it has been transformed back into the time domain.

The process 32 applies a first transition function $T_L(\omega)$ to the high frequency end of the lower frequency signal $S_L(\omega)$, namely:

$$S_L^*(\omega) = S_L(\omega).\,T_L(\omega) \qquad \text{for } \omega_A \le \omega \le \omega_B \qquad\qquad (\text{Eq. 4})$$

In this example, a trigonometric function is used, preferably:

$$T_L(\omega) = \cos^2\left(\pi/2\,\frac{(\omega - \omega_A)}{(\omega_B - \omega_A)}\right) \qquad\qquad (\text{Eq. 5})$$

The process 32 applies a second transition function $T_H(\omega)$ to the low frequency end of the high frequency signal $S_H(\omega)$, namely:

$$S_H^*(\omega) = S_H(\omega).\,T_H(\omega) \qquad \text{for } \omega_A \le \omega \le \omega_B \qquad\qquad (\text{Eq. 6})$$

In this example, a trigonometric function is used, preferably:

$$T_H(\omega) = \sin^2\left(\pi/2\,\frac{(\omega - \omega_A)}{(\omega_B - \omega_A)}\right) \qquad\qquad (\text{Eq. 7})$$

If the signals $S_L^*(\omega)$, $S_H^*(\omega)$ are added, i.e. $Y(\omega) = S_L^*(\omega) + S_H^*(\omega)$, then:

$$Y(\omega) = S_L(\omega) \qquad \text{for } \omega \leq \omega_A \qquad\qquad \text{(Eq. 8)}$$

$$Y(\omega) = S_L(\omega) \cdot \cos^2\left(\pi/2 \frac{(\omega - \omega_A)}{(\omega_B - \omega_A)}\right) + S_H(\omega) \cdot \sin^2\left(\pi/2 \frac{(\omega - \omega_A)}{(\omega_B - \omega_A)}\right)$$

$$\text{for } \omega_A \leq \omega \leq \omega_B \qquad\qquad \text{(Eq. 9)}$$

$$Y(\omega) = S_H(\omega) \qquad \text{for } \omega_B \leq \omega \qquad\qquad \text{(Eq. 10)}$$

The signal transition process 32 may be performed on a series of overlapping signals $S_1(\omega)$, $S_2(\omega)$, $S_3(\omega)$,.., $S_n(\omega)$ having centre frequencies $\omega_1$, $\omega_2$, $\omega_3$,..., $\omega_n$, wherein $\omega_1 < \omega_2 < \omega_3 < \omega_n$. The signals can be processed in pairs to transform the higher frequency end of the lower frequency signal in a pair and the lower frequency end of a higher frequency signal in the pair, such as first and second signals $S_1(\omega)$, $S_2(\omega)$, second and third signals $S_2(\omega)$, $S_3(\omega)$ and so on. The signal transition process 32 can be used produce a series of transformed signals $S^*_1(\omega)$, $S^*_2(\omega)$, $S^*_3(\omega)$,.., $S^*_n(\omega)$ ready for adding.

The signal merging process 33 comprises receiving a plurality of signals $S^*_1(\omega)$, $S^*_2(\omega)$,.., $S^*_n(\omega)$ and merging the signals into a merged signal $Y(w)$ in the frequency domain. The process preferably comprises adding together the signals across a given frequency range, i.e.:

$$Y(\omega) = S^*_1(\omega) + S^*_2(\omega) + \ldots + S^*_n(\omega) \qquad\qquad \text{(Eq. 11)}$$

The signals may be merged in other ways.

The merged signal $Y(w)$ is a wideband signal created from a plurality of narrowband signals. In other words, the first signal $S^*_1(\omega)$ includes a first frequency range $\Delta\omega_1$ and the second signal $S^*_2(\omega)$ includes a second, different frequency range $\Delta\omega_2$. However, the first and second frequency ranges $\Delta\omega_1$, $\Delta\omega_2$ overlap in a range $\Delta\omega_{1,2}$ preferably determined in the manner in described earlier. The merged signal $Y(w)$ has a frequency range $\Delta\omega_Y$ which includes at least the overlapping frequency range $\Delta\omega_{1,2}$. If other signals are also included in a similar way, then the frequency range $\Delta\omega_Y$ includes other, additional frequency ranges. Thus, the merged signal $Y(w)$ extends from the lower limit $S^*_1(\omega)$ to an upper limit of $S^*_n(\omega)$.

Sections of the synthesised wideband signal may be extracted for display.

The frequency adjusting process 34 comprises adjusting a centre frequency of a merged signal $Y(w)$ and may also comprise adjusting the frequency range of the merged signal $Y(w)$. Preferably, a smooth envelope function $Q(\omega)$ centred on a selected frequency and having a selected bandwidth is applied to the merged signal $Y(w)$ to prevent sharp changes in amplitude, i.e.:

$$Z(\omega) = Q(\omega).Y(\omega) \qquad\qquad \text{(Eq. 12)}$$

The extraction process 35 comprises extracting a single mode and/or modes in a single direction from one or more signals $Z_1(\omega)$, $Z_2(\omega)$,,,.., $Z_p(\omega)$. Extracting comprises applying amplitude and phase shifts to the signal or signals

$Z_1(\omega)$, $Z_2(\omega)$,..., $Z_p(\omega)$ to select a given mode or modes in preference to other modes. The process is described in WO-A-9612951.

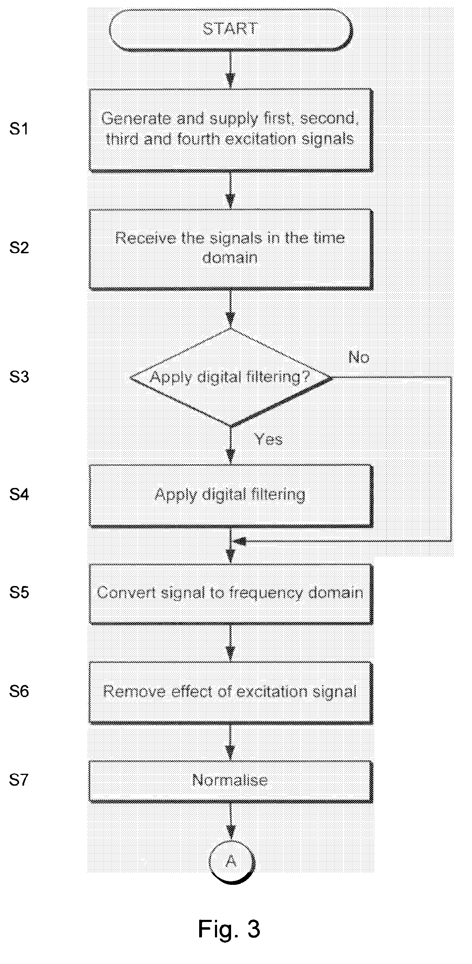

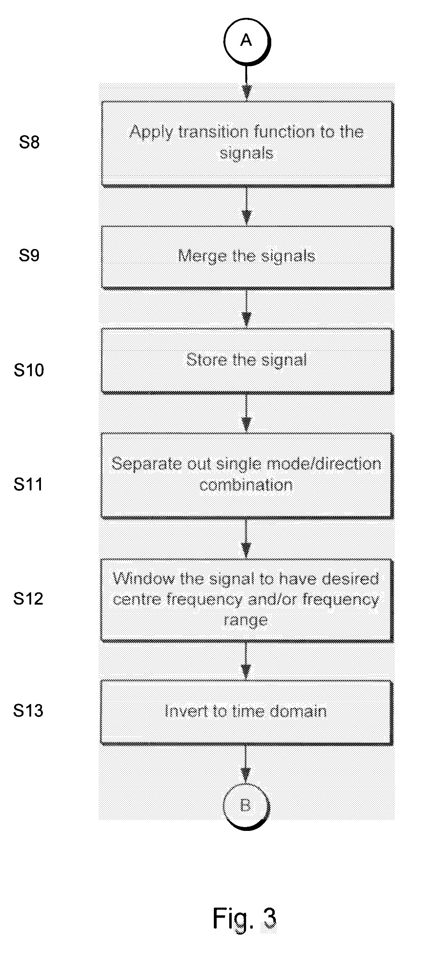

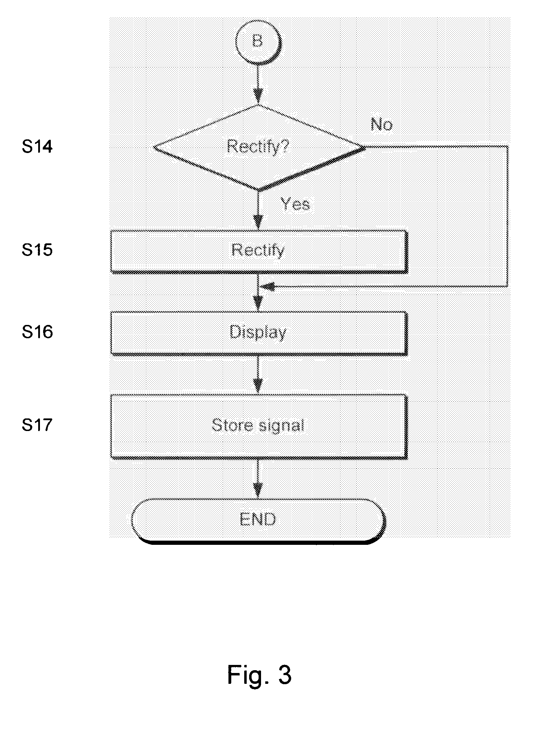

Referring to Figures 1, 2, and 3, a method of signal processing employing the processes 27, 28, 29, 30, 31, 32, 33, 34, 35 will now be described.

An operator selects the number of excitation signals to be used in a set of measurements and chooses their respective centre frequencies $f_1$, $f_2$, $f_3$, $f_4$ using user input interface 15. In this example, four excitation signals are used. Alternatively, the processor 12 may use a pre-defined number of excitation signals and pre-defined centre frequencies.

As explained earlier in relation to the signal transition process 32, the centre frequencies $f_1$, $f_2$, $f_3$, $f_4$ may be chosen such that the - 3 dB points of falling and rising edges of adjacent excitation signals are at least approximately at the same frequency.

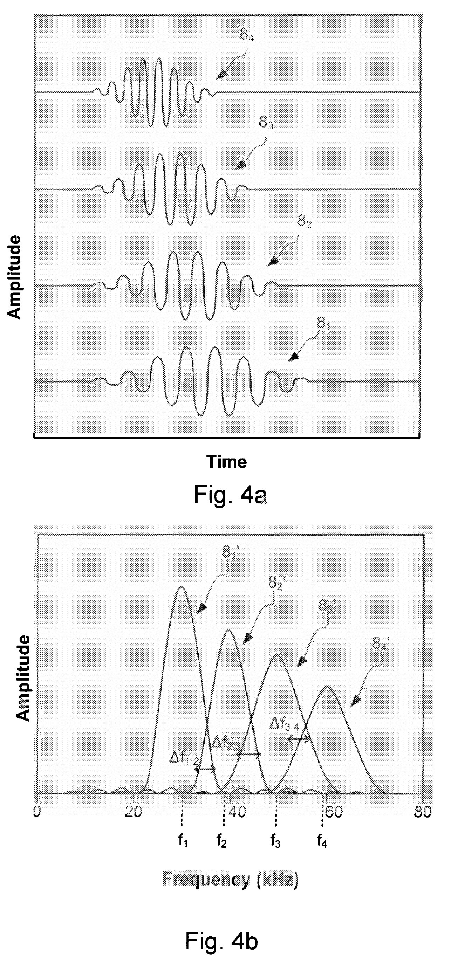

Referring also to Figures 4a and 4b, the processor 12 generates first, second, third and fourth excitation signals $8_1$, $8_2$, $8_3$, $8_4$ having respective centre frequencies $f_1$, $f_2$, $f_3$, $f_4$ and supplies the signals $8_1$, $8_2$, $8_3$, $8_4$ to the signal interface 11 (step S1). In this example, the first, second, third and fourth centre frequencies are 33 kHz, 39 kHz, 46 kHz and 60 kHz. It will be appreciated that fewer or more excitations signals may be generated and that different centre frequencies may be used.

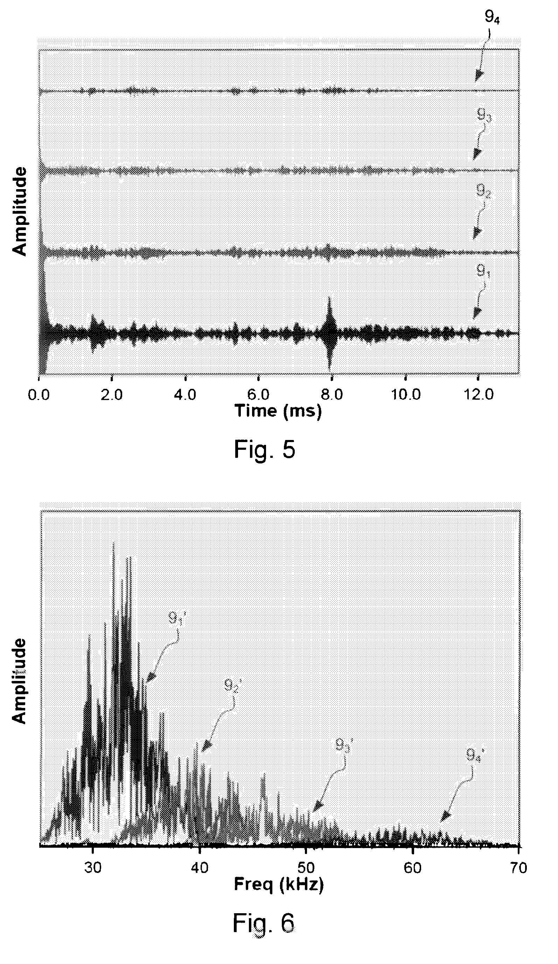

Referring in particular to Figure 4b, respective frequency responses $8_1'$, $8_2'$, $8_3'$, $8_4'$ for the first, second, third and fourth excitation signals $8_1$, $8_2$, $8_3$, $8_4$ are shown. The first and second frequency responses $8_1'$, $8_2'$ overlap in a first overlapping range $\Delta f_{1,2}$. Likewise, the second and third frequency responses $8_2'$, $8_3'$ overlap in a second overlapping range $\Delta f_{2,3}$, as do the third and fourth $8_3'$, $8_4'$ overlap in a third overlapping range $\Delta f_{3,4}$. The overlapping frequency responses allow a wideband excitation response to be synthesized from narrowband response signals $9_1$, $9_2$, $9_3$, $9_4$ (Figure 5).

The signal interface 11 converts the excitation signals $8_1$, $8_2$, $8_3$, $8_4$ from digital into analogue form and passes the signals $8_1$, $8_2$, $8_3$, $8_4$ to the signal module 7 which sequentially supplies the excitation signals $8_1$, $8_2$, $8_3$, $8_4$ to the transducers 6. This generates respective excitation waves (not shown) in the pipe 2.

Referring still to Figures 1, 2 and 3 and also to Figure 5, the supply module 7 supplies the first signal $8_1$ to the transducers 6, then waits to receive a response signal $9_1$. The supply module 7 may wait a predetermined time or monitor the response signal $9_1$ to determine the end of the measurement before supplying the next signal $8_2$. The supply module 7 may supply a signal several times and take an average or use the sum of plural response signals.

Corresponding reflected waves (not shown) are received by the transducers 6, which generate respective sets of signals which are combined to provide first, second, third and fourth response signals $9_1$, $9_1$, $9_3$, $9_4$. The signal module 7 amplifies the signals $9_1$, $9_2$, $9_3$, $9_4$ and passes the signals to the signal interface 11 which converts the signals $9_1$, $9_2$, $9_3$, $9_4$ from analogue to digital form.

The processor 12 receives the first, second, third and fourth response signals $9_1$, $9_2$, $9_3$, $9_4$ in the time domain (step S2). The processor 12 decides whether to filter each signal $9_1$, $9_2$, $9_3$, $9_4$ (step S3). If filtering is required, then the signals $9_1$, $9_2$, $9_3$, $9_4$ are filtered using digital filtering 28 (step S4).

Referring also to Figure 6, the processor 12 converts each response signal $9_1$, $9_2$, $9_3$, $9_4$ from the time domain into corresponding signals $9_1'$, $9_2'$, $9_3'$, $9_4'$ in the frequency domain using signal transformation 29 (step S5).

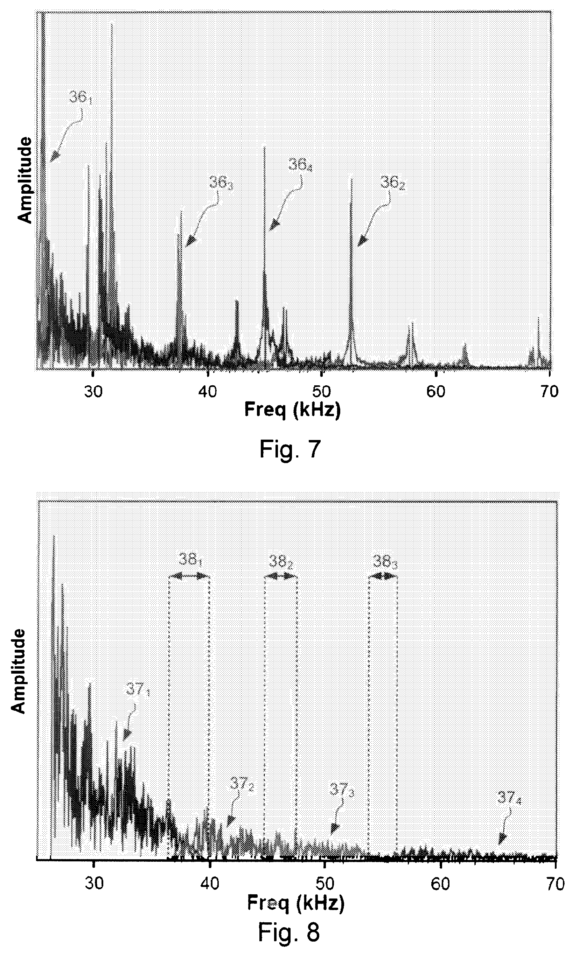

Referring still to Figures 1, 2 and 3 and also to Figure 7, the processor 12 removes the effect of each excitation signal $8_1$, $8_2$, $8_3$, $8_4$ from each respective response signal $9_1$, $9_2$, $9_3$, $9_4$ using signal removal 30 to provide first, second, third and fourth excitation-free response signals $36_1$, $36_2$, $36_3$, $36_4$ in the frequency domain (step S6).

Referring also to Figure 8, the processor 12 normalises each excitation-free response signal $36_1$, $36_2$, $36_3$, $36_4$ using signal normalisation 31 to produce normalised excitation-free response signals (not shown) (step S7) and transforms the normalised excitation-free response signals (not shown) using signal transition 32 in overlapping frequency ranges $38_1$, $38_2$, $38_3$ to provide first, second, third and fourth transformed and normalised excitation-free response signals $37_1$, $37_2$, $37_3$, $37_4$ (step S8).

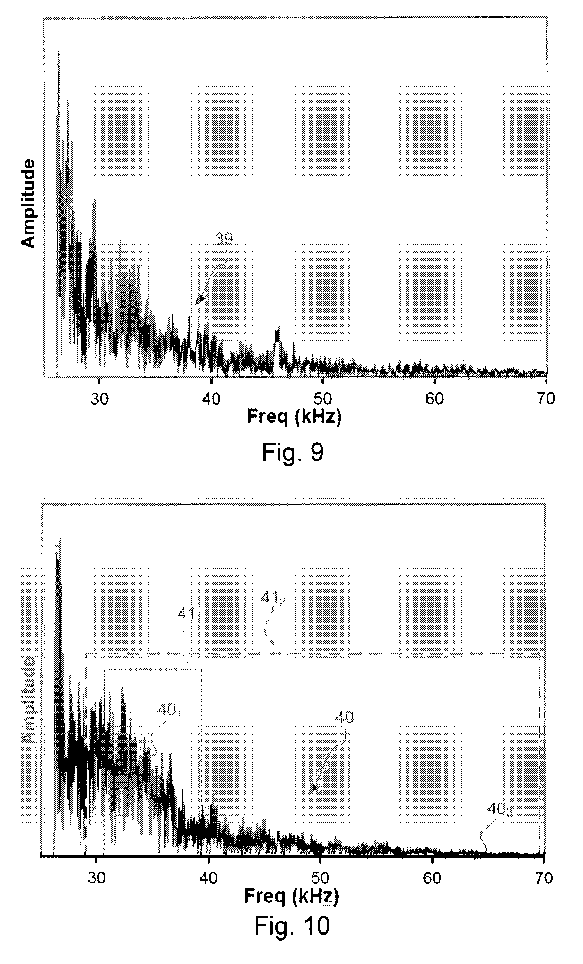

Referring still to Figures 1, 2 and 3 and also to Figure 9, the processor 12 merges the transformed and normalised excitation-free response signals $37_1$, $37_2$, $37_3$, $37_4$ using signal merging 33 to produce a merged signal 39 (step S9).

The merged signal 39 is stored (step S10) in the storage 14.

The merged signal 39 can be considered to be a response signal (in the frequency domain) as if the pipe 2 had been excited using a single wideband excitation signal (not shown).

The processor 12 may convert the merged signal 39 from the frequency domain into the time domain for display using signal transformation process 29. However, the processor 12 may process the merged signal 39, for example to extract a given mode or modes in a given direction and to obtain a response at a user-defined centre frequency using frequency adjusting process 34.

Referring still to Figures 1, 2 and 3 and also to Figure 10, the processor 12 may extract a single mode in a given propagation direction using the extraction process 35 to provide an extracted mode signal 40 (step S11). The frequency range of the extracted mode includes at least the above-mentioned overlapping frequency ranges.

The processor 12 may select a portion $40_1$, $40_2$ of the extracted mode signal 40 within a frequency window

$41_1$, $41_2$ at a given centre frequency and given frequency range specified by an operator.

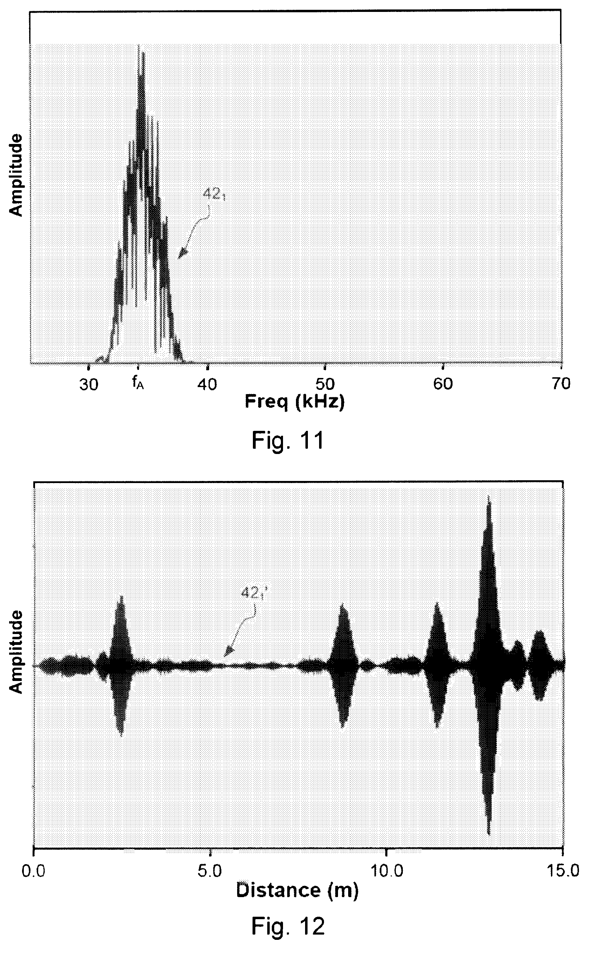

Referring to Figure 11, the processor 12 extracts a first portion $40_1$ of the extracted mode signal 40 within a first frequency window $41_1$ and applies an envelope function (not shown) to obtain a first windowed signal $42_1$ (step S12).

Referring to Figure 12, the processor 12 converts the first windowed signal $42_1$ from the frequency domain into a corresponding signal $42_1$' in the time domain using signal transformation process 29 (step S13). The processor 12 may optionally rectify the signal $42_1$' (steps S14 & S15) before presenting the time-dependent signal $42_1$' on display 16 (step S16). The processor 12 may also store the signal $42_1$' in storage 14.

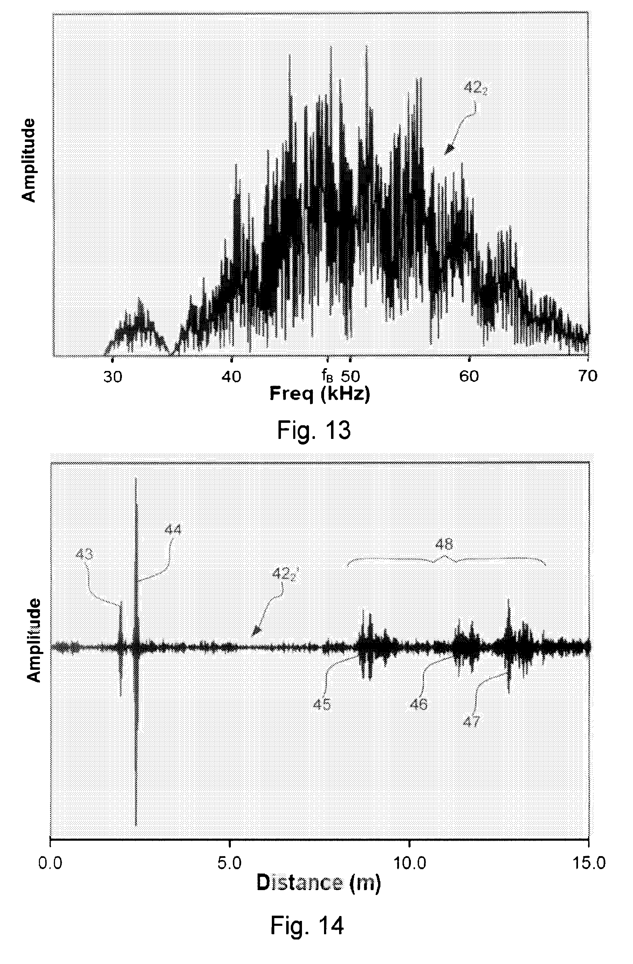

Referring to Figure 13, the processor 12 may extract a second portion $40_2$ of the single mode signal 40 within a second, different frequency window $41_2$ and applies an envelope function (not shown) to obtain a second windowed signal $42_2$ (step S12).

Referring to Figure 14, the processor 12 converts the second windowed signal $42_2$ from the frequency domain into a corresponding signal $42_2$' in the time domain (step S13). The processor 12 may optionally rectify the signal $42_2$' (steps S14 & S15) before presenting the time-varying signal $42_2$' on display 16 (step S16). The processor 12 may also store the signal $42_2$' in storage 14.

Thus, the operator may view a response having a centre frequency $f_A$, $f_B$ different to the first, second, third or fourth centre frequencies $f_1$, $f_2$, $f_3$, $f_4$.

In Figure 14, the signals $42_1$', $42_2$' include a feature 43 caused by corrosion (not shown), features 44, 45, 46 caused by welds (not shown), a feature 47 caused by a flange and a spread-out feature 48 caused by corrosion (not shown). Corresponding features may also be identified in Figure 12.

It will be appreciated that many modifications may be made to the embodiments hereinbefore described. The processor 12 may combine some of the response signals $9_1$, $9_2$, $9_3$, $9_4$ to produce a first merged signal and then combine the first merged signal with another response signal $9_1$, $9_2$, $9_3$, $9_4$ to produce a second merged signal. The processor 12 may combine the second merged signal with further response signals $9_1$, $9_2$, $9_3$, $9_4$ until all the response signals $9_1$, $9_2$, $9_3$, $9_4$ have been used. The excitation signals need not be symmetrical about a centre frequency in the frequency domain. Thus, a peak value or median value may be used. The signal processing arrangement may be used in apparatus for testing, analysing or inspecting structure or condition of a subject.

**Claims**

1. A signal processing arrangement comprising:

   means for providing first and second signals, wherein the first signal includes a first frequency range, the second signal includes a second, different frequency range and the first and second frequency ranges overlap in an overlapping frequency range; and
   means for combining the first and second signals, the means being configured to produce a combined signal having a third frequency range, the third frequency range including at least the overlapping frequency range.

2. A signal processing arrangement according to claim 1, wherein said means for providing first and second signals comprises means for providing first and second signals in the frequency domain.

3. A signal processing arrangement according to claim 1 or 2 comprising:

   means for receiving the first and second signals in the time domain; and
   means for converting said first and second signals into the frequency domain.

4. A signal processing arrangement according to any preceding claim comprising:

   means for removing first and second excitation signals from the first and second signals respectively.

5. A signal processing arrangement according to any preceding claim comprising:

   means for normalising the first and second signals with respect to respective reference signals.

6. A signal processing arrangement according to any preceding claim comprising:

   means for determining the overlapping frequency range; and
   means for modifying the first and second signals in the overlapping frequency range.

**7.** A signal processing arrangement according to claim 6, wherein the means for modifying the first and second signals in the overlapping frequency range comprises means for applying a first transition function to the first signal and a second transition function to the second signal.

**8.** A signal processing apparatus according to claim 7, wherein the means for applying a first transition function to the first signal and a second transition function to the second signal comprises means for multiplying the first signal by said first transition function in said overlapping frequency range and multiplying the second signal by said second transition function in said overlapping frequency range.

**9.** A signal processing apparatus according to claim 7 or 8, wherein said first transition function has a value of 0 at a first end of said overlapping frequency range and a value of 1 at a second end of said overlapping frequency range, and said second transition function has a value of 1 at the first end of said overlapping frequency range and a value of 0 at a second end of said overlapping frequency range.

**10.** A signal processing apparatus according to any one of claims 7 to 9, wherein a sum of the first and second transition functions at a given frequency in the overlapping frequency range equals 1.

**11.** A signal processing apparatus according to any one of claims 7 to 10, wherein said first and second transition functions are trigonometric.

**12.** A signal processing apparatus according to any one of claims 7 to 11, wherein said first and second transition functions are defined in equations 5 and 7.

**13.** A signal processing arrangement according to any preceding claim, wherein means for combining the first and second signals comprises means for adding together said first and second signals in the frequency domain.

**14.** A signal processing arrangement according to any preceding claim, comprising:

means for converting the combined signal into the time domain.

**15.** A signal processing arrangement according to any preceding claim, comprising:

means for outputting said combined signal.

**16.** A signal processing arrangement according to any preceding claim comprising:

means for providing first, second and third signals in the frequency domain, wherein the first signal includes a first frequency range, the second signal includes a second, different frequency range, the third signal includes a third, different frequency range and the first and second frequency ranges overlap in a first overlapping frequency range and the second and third frequency ranges overlap in a second overlapping frequency range; and

means for combining the first, second and third signals, the means being configured to produce a combined signal having a fourth frequency range, the fourth frequency range including at least the first overlapping frequency range, the second frequency range and the second overlapping frequency range.

**17.** A signal processing arrangement according to any preceding claim, wherein the first and second signals each originate from at least one transducer.

**18.** A signal processing arrangement configured to provide first and second signals, wherein the first signal includes a first frequency range, the second signal includes a second, different frequency range and the first and second frequency ranges overlap in an overlapping frequency range, and to combine the first and second signals to produce a combined signal having a third frequency range, the third frequency range including at least the overlapping frequency range.

**19.** Apparatus for testing, analysing or inspecting a subject using waves, including:

the signal processing arrangement according to any one of claims 1 to 18.

**20.** Apparatus for inspecting an elongate member using guided ultrasonic waves including:

the signal processing arrangement according to any one of claims 1 to 18.

**21.** Apparatus according to claim 19 or 20, comprising:

means for generating first and second excitation signals; and
means for receiving the first and second signals corresponding to the first and second excitation signals respectively.

**22.** Apparatus according to claim 21, wherein said signal generating means is configured to generate said signals successively.

**23.** Apparatus according to any one of claims 19 to 22, comprising:

means for generating waves for inspecting the subject.

**24.** Apparatus according to claim 23, wherein the wave generating means is configured to excite waves in the subject.

**25.** Apparatus according to claim 23 or 24, wherein the wave generating means comprises at least one transducer.

**26.** Apparatus according to any one of claims 19 to 25, comprising:

means for generating the first and second signals.

**27.** Apparatus according to claim 26, wherein the signal generating means is configured to detect waves in the subject.

**28.** Apparatus according to claim 26 or 27, wherein the signal generating means comprises at least one transducer.

**29.** Apparatus according to claim 23 and 27, wherein the wave generating means and the signal generating means are the same.

**30.** A method of signal processing, the method comprising:

providing first and second signals, wherein the first signal includes a first frequency range, the second signal includes a second, different frequency range and the first and second frequency ranges overlap in an overlapping frequency range; and
combining the first and second signals, the means being configured to produce a combined signal having a third frequency range, the third frequency range including at least the overlapping frequency range.

**31.** A method of testing, analysing or inspecting a subject using waves including a method of signal processing according of claim 30.

**32.** A method of inspecting an elongate member using guided ultrasonic waves including a method of signal processing according of claim 30.

**33.** A computer program comprising instructions which, when executed by a data processing arrangement, causes said data processing arrangement to perform a method according to any one of claims 30 to 32.

**34.** A computer-readable medium storing a computer program according to claim 33.

**35.** A signal carrying a computer program according to claim 34.

**36.** A signal processing arrangement comprising:

at least one processor configured to provide first and second signals, wherein the first signal includes a first frequency range, the second signal includes a second, different frequency range and the first and second frequency ranges overlap in an overlapping frequency range; and to combine the first and second signals, and to produce a combined signal having a third frequency range, the third frequency range including at least the overlapping frequency range.

Fig. 1

Fig. 2

START

S1 — Generate and supply first, second, third and fourth excitation signals

S2 — Receive the signals in the time domain

S3 — Apply digital filtering? — No

Yes

S4 — Apply digital filtering

S5 — Convert signal to frequency domain

S6 — Remove effect of excitation signal

S7 — Normalise

A

Fig. 3

A

S8 | Apply transition function to the signals

S9 | Merge the signals

S10 | Store the signal

S11 | Separate out single mode/direction combination

S12 | Window the signal to have desired centre frequency and/or frequency range

S13 | Invert to time domain

B

Fig. 3

S14

S15

S16

S17

Fig. 3

Fig. 4a

Fig. 4b

Fig. 5

Fig. 6

Fig. 7

Fig. 8

Fig. 9

Fig. 10

Fig. 11

Fig. 12

**Fig. 13**

**Fig. 14**